# EUROPEAN PATENT APPLICATION

(11) **EP 4 484 111 A1**
(43) Date of publication of application: **01.01.2025**
(21) Application number: 23182110.9
(22) Date of filing: 28.06.2023
(51) Int. Cl.: B29C 43/24, B29C 43/30, B29C 43/28, B29C 43/46, B29C 43/54, B29K 27/06, B29K 105/00, B29K 105/08, B29K 105/16, B29K 509/00, B29L 7/00, B29L 9/00, B29L 31/00

(54) **PROCESS FOR MAKING A SHEET PRODUCT**

(71) Applicant: Rodolfo Comerio Srl, 21058 Solbiate Olona (VA) (IT)
(72) Inventor: COMERIO, Carlo, 21058 Solbiate Olona (VA) (IT)
(74) Representative: M. Zardi & Co S.A.

(57) **Abstract**

Calendering process, and calender thereof, in which two sheets (14, 15) of a plastic compound, of the type comprising a thermoplastic polymer, a filler material and additives, are obtained by calendering and directly coupled with each other or with an intermediate reinforcement layer (16), by passing through two coupling cylinders (10, 11) immediately adjacent the calendering cylinders, thus forming a sheet product (18) suitable for constituting the underlayer of synthetic flooring, in particular of the LVT or SPC type.

## Description

### Field of application

The invention relates to the production sector of sheet products. In particular, the invention relates to the production of a semi-finished product comprising two layers of plastic material with possible internal reinforcement layer, of the type usable as base layer for floors.

### Prior art

The term "sheet product" or simply "sheet" indicates a semi-finished product for industrial purposes having a thickness much smaller than the width, typically for example the thickness of a sheet product is few millimeters, while the width can be one or two meters. Those products are made in slabs with a discontinuous process or, preferably, in rolls or reels with a continuous process.

Sheet products are of industrial interest for various applications and can comprise different layers coupled with suitable techniques. A sheet product of particular interest, to which the present invention is directed, comprises two layers of plastic material coupled together directly or by interposing a central reinforcing layer, for example, of glass fiber. The plastic material in question comprises a thermoplastic polymer, for example PVC, mixed with at least one filler material and optionally with additives.

An application of considerable interest is represented by underlayers (*cores*) for synthetic floors. For example, SPC (Stone Polymer Composite) or LVT (Luxury Vinyl Tiles) flooring generally uses a "core" comprising two layers of a plastic material, made with calcium carbonate mixed with PVC powder plus any additives, and optionally a central layer of glass fiber. Above the core, to make the floor, one or more additional layers are applied that can have the function of decoration and protection against wear, UV rays, etc. In the two main layers of the core, calcium carbonate is used essentially for its low cost and features of stiffness and thermal stability, and can also represent more than 50% of the compound, while the PVC powder is to confer plasticity. Additives can be plasticizers and stabilizers; in the lower layer a blowing agent can be used as an additive that gives a certain cushioning capacity to the product.

In the background art, the sheets of plastic material (referred to as "compound" for short) are produced by extrusion while the sandwich (that is, the joining of the sheets, possibly with central reinforcement) is made in a press. Such process has the disadvantage of being inherently slow.

The calendering process, on the other hand, takes place continuously and is therefore an intrinsically fast process, attractive to increase productivity. SO far however, the calendering process has been deemed unsuitable or not competitive for this specific application. The known calendering processes are considered not suitable for the plastic compound sheets considered herein, mainly due to the fact that such sheets have a significant mass and a certain stiffness and tend to warp (for example, by losing flatness) due to cooling. Since a calendering line essentially develops in length, the sheet would be particularly exposed to this problem. One can think of heating the sheet to keep it warm, but this involves a high consumption of energy.

### Summary of the invention

The invention addresses the problem of how to make by calendering a sheet product of the type used for the core (or base) of LVT and SPC floors, i.e., essentially, a product comprising two layers made of a plastic compound with possible intermediate reinforcing layer.

The problem is solved by a process according to the claims.

In the process of the invention, the two plastic compound sheets are both obtained by calendering, in two respective groups (calenders) each comprising at least two counter-rotating cylinders. The two sheets thus obtained, after detachment from the respective calendering group, are led directly to a further pair of cylinders operating as coupling cylinders and sandwiching directly the two plastic compound sheets, or optionally with the interposition of an intermediate reinforcing layer. Said layer, if present, is separately and individually fed to the two coupling cylinders.

Both plastic compound sheets pass from the calendering cylinders to the coupling cylinders directly without intermediate process steps. This means for example that the sheets are not heated and do not undergo treatments that modify their physical properties or structure. The coupling cylinders are immediately adjacent to the calendering cylinders in order to shorten the path of the sheets. Advantageously, said path is the minimum possible, compatible with the overall dimensions of the cylinders and the construction requirements.

The great advantage of the invention is that it allows the making by a calendering process of a multilayer sheet, of the type that can be used as a base for LVT or SPC, with high productivity and economic advantage over conventional extrusion-based processes. A notable feature of the invention is the making of plastic compound sheets by calendering instead of extruding. The coupling group proximate to the calendering groups basically allows to carry out the coupling of the compound sheets immediately after detachment from the calendering group (detachment from the output cylinder). In this way, the sheet remains in temperature; it is not necessary to heat it from the outside and it does not undergo deformation (for example, loss of width) due to cooling.

Also, an object of the invention is a process for making a multilayer material for a synthetic floor, such as an LVT or SPC floor, comprising the steps of making a base layer with the process according to the claims and applying to said base layer one or more additional finishing and/or protective layers. The invention also relates to a calendering system according to the claims.

### Description of the invention

The invention uses the calendering process which is per se known and does not need to be described in detail. It essentially provides for the passage of the material to be calendered between two counter-rotating cylinders. The assembly of the two counter-rotating cylinders is also called calendering group.

In the invention the sheets, being of high temperature plastic material, remain adherent to one of the calendering cylinders ("output cylinder"). Thus, a detaching cylinder is advantageously provided in the immediate vicinity of the output cylinder. The detaching cylinder, in turn, is placed adjacent to one of the two coupling cylinders, so that each of the two plastic compound sheets, after detachment from the calender, goes directly to the coupling cylinders.

The invention reduces the temperature drop (delta T) resulting from spontaneous cooling of the sheet while traveling from the calendering group to the coupling group. This temperature drop is reduced to substantially negligible values thanks to the close positioning of the cylinders. Advantageously, the arrangement of the calendering cylinders and coupling cylinders is such that the temperature difference of the first sheet and of the second sheet between detachment from the calendering cylinders and admission between the coupling cylinders does not exceed the value of 2 degrees °C.

The sheets of plastic compound can be coupled with or without the addition of an intermediate reinforcing layer. If envisaged, said intermediate layer is fed to the two coupling cylinders individually and separately from the sheets of compound. Preferred materials for the intermediate layer include glass fiber or woven fabric. The passage between the coupling cylinders joins simultaneously the first sheet, the second sheet and the intermediate layer.

Preferably the first compound and the second compound both include PVC or PP as thermoplastic polymer and calcium carbonate as filler material. The composition of the two compounds can be the same or different. The weight percent of calcium carbonate may be predominant: in preferred applications it is at least 50%, preferably between 50% and 80%, the remainder to 100 being given by the polymer and the additives. The percentage of additives is usually about 1%.

Additives can have various functions such as stabilizer, plasticizer, etc. In the field of manufacturing a floor underlayer, a blowing agent may be used as additive to give cushioning capacity, particularly in the compound used for the bottom layer.

Preferably, the first compound and the second compound are fed to the calendering cylinders in the form of a continuous bead of material, which is brought to viscous state and reduced to sheet in the passage between the calendering cylinders.

The process may include the step of making a polishing or surface finishing or embossing on a surface of the first and/or second plastic compound sheets during the passage between the coupling cylinders. One or both the coupling cylinders can have a surface suitably configured for this purpose.

Preferably the first sheet and second sheet each have a thickness between 0.70 mm and 3.0 mm. The thickness of the product resulting from the coupling of the first sheet and second sheet, optionally with the intermediate reinforcing layer, is preferably at least 2 mm, for example in the range from 2 mm to 4 mm.

The coupling cylinders can operate with gap coupling or with pressure coupling. In the first case (gap coupling), there is a gap space between the two cylinders and said gap space is controlled to remain constant; in the second case (pressure coupling) instead, one of the coupling cylinders is pushed against the other and the pressure thus exerted is controlled.

An application of considerable industrial interest is represented by SPC or LVT type floors. The described calendering and coupling process of plastic compound sheets, optionally with intermediate reinforcement, allows to make the sublayer (also called base layer or "core") of the floor; then, to said base layer one or more finishing layers are applied, such as a printed decorative layer, a wear resistant layer, a UV protective film, or other depending on the product. One or more of these further layers can also be applied by calendering.

However, application to floors of the above-mentioned type is not exclusive. The invention can be usefully applied to make technical sheets for tensile structures, membrane covers, vehicle tarpaulins and similar products.

A calendering system for implementing the process of the invention essentially comprises:
at least a first pair of calendering cylinders arranged for calendering the first plastic compound thus obtaining a first sheet;
at least a second pair of calendering cylinders arranged for calendering the second plastic compound thus obtaining a second sheet;
two coupling cylinders arranged to join together, by calendering, the first sheet coming directly from the first pair of calendering cylinders and the second sheet coming directly from the second pair of calendering cylinders, optionally interposing an intermediate layer.

The two calendering groups and the coupling group are advantageously close together, constituting a single calendering section or island, in order to shorten the path of the plastic compound sheets between calendering and coupling.

A preferred arrangement of the cylinders is as follows.

The first pair of calender cylinders and the second pair of calender cylinders comprise each an upper cylinder and a lower cylinder. In each pair, the lower cylinder axis is therefore at a lower height than the upper cylinder axis, even if the axes of said two cylinders are not necessarily vertically aligned.

The second pair of calendering cylinders is placed at a higher elevation than the first pair, i.e., the axis of the lower cylinder of the second pair is at a higher elevation than the axis of the upper cylinder of the first pair.

The two coupling cylinders are located at an intermediate elevation between the two pairs of calendering cylinders, that is, at an elevation comprised between the upper cylinder of the first pair and the lower cylinder of the second pair.

A preferred arrangement of the cylinders (calendering and coupling cylinders) satisfies the following conditions: there is at least one vertical plane which intersects at least one cylinder of the first calendering pair and at least one cylinder of the second calendering pair, and furthermore there is at least one vertical plane which intersects both coupling cylinders and at least one of the calendering cylinders.

The invention provides that the coupling cylinders can operate by controlling the gap space or the pressure exerted against the other cylinder and, consequentially, on the sheets. Preferably, the control is given by one of the two coupling cylinders that is associated with an appropriate positioning system, for example a lever system. During the operation with gap coupling, the position of said cylinder is controlled to keep the gap space constant, and during the operation with pressure coupling the position of said cylinder is controlled to obtain the desired pressure.

According to a further preferred feature, at least one of the two coupling cylinders is movable from the working position to a servicing position in which it is accessible for disassembly and replacement and/or for threading of the intermediate layer.

### Description of the drawings

FIG. 1 schematically shows the process according to one embodiment of the invention.
FIG. 2 shows a calendering unit usable to implement the invention, according to one embodiment.
FIG. 3 represents an example of SPC floor obtainable with the invention.

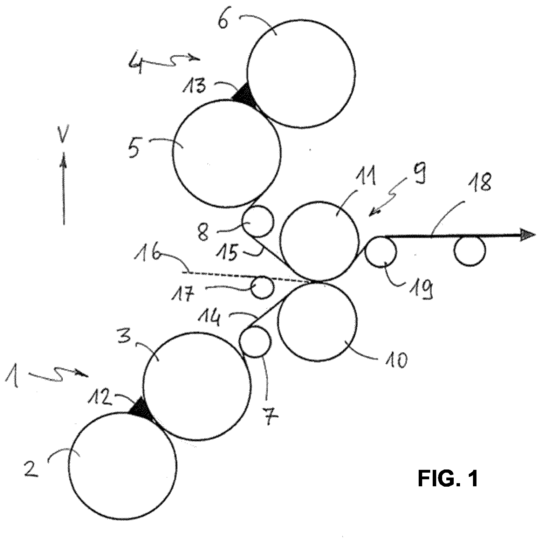

FIG. 1 shows the following elements:
first calendering group 1, comprising a lower cylinder 2 and an upper cylinder 3;
second calendering group 4, comprising a lower cylinder 5 and an upper cylinder 6;
detaching cylinders 7, 8;
coupling group 9 comprising coupling cylinders 10, 11;
first plastic compound 12 fed to the calendering group 1 and second plastic compound 13 fed to the calendering group 2;
sheet 14 of the first compound, calendered by group 1;
sheet 15 of the second compound, calendered by group 2;
glass fiber 16 and respective guide cylinder 17 towards the coupling unit 9;
product 18, obtained by coupling the sheets 14, 15 and the glass fiber reinforcement layer 16;
detaching cylinder 19 for product 18.

The arrow V of Fig. 1 indicates the vertical.

In each of the groups 1, 4 and 9, the two cylinders of the group are of course counter-rotating. The cylinders 3 and 5 can be referred to as output cylinders as the plastic compound sheet remains adhered to the surface of the cylinder and is detached with the aid of the cylinders 7 and 8 to be directed towards the coupling group 9.

The sheets 14 and 15 are obtained as a result of the calendering process of the compound 12, 13 through the respective counter-rotating cylinders. As exemplified in Fig. 1, the sheets 14, 15 exiting the respective calendering group 1, 4 are led directly between the coupling cylinders 10 and 11.

Note, in Fig. 1, the close position of the coupling unit 9 to the calendering groups. The path of sheets 14 and 15 between the detachment from the cylinders 3, 5 and the admission in the coupling cylinders 10, 11 is substantially the minimum required by the overall dimensions of the mechanics. In this way, the sheets 14 and 15 remain in temperature, they do not deform due to cooling and reach group 9 still being in a plastic state which allows the optimal coupling process.

FIG. 1 also shows the optional inclusion of a reinforcing layer, represented here by the glass fiber 16.

It should be noted that the passage between cylinders 10 and 11 joins together the first sheet 14, the second sheet 15 and the glass fiber intermediate reinforcing layer 16, at the same time.

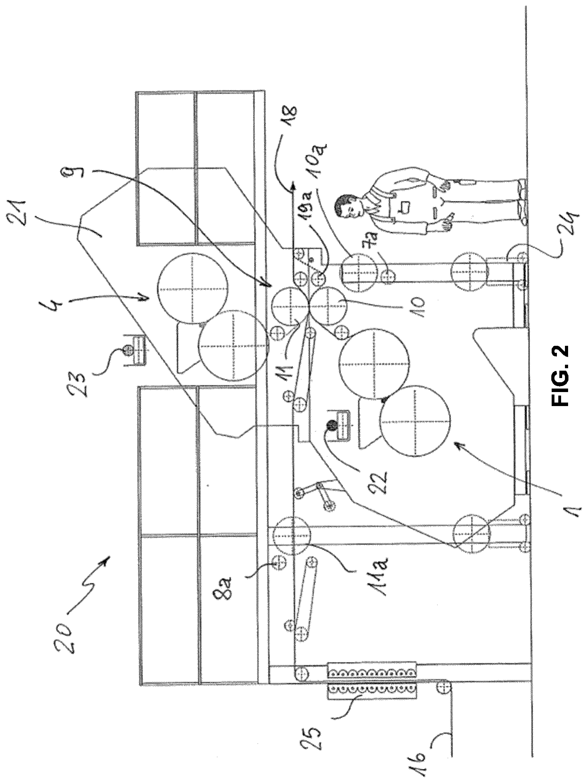

Additional features, with reference to a preferred embodiment, are shown in Fig. 2.

FIG. 2 shows that the groups 1, 4 and 9 are part of a single calender 20 whose supporting structure is indicated by the reference number 21. The figure also shows the feeding of the plastic compound which occurs in the form of a bead 22, 23 which, in Fig. 2, is visible in cross-section. Said plastic material bead is placed between the cylinders of the calenders 1 and 4, forming the feed material 12, 13 of Fig. 1.

It can be understood from Fig. 2 that the sheet calendering operations of the compound and subsequent coupling of sheets are carried out entirely in the calender 20, without transporting the sheets to a subsequent area of the production line.

Advantageously one or both the coupling cylinders 10, 11 are movable from the working position to a servicing position in which the cylinder is accessible for disassembly and replacement and/or for threading the intermediate layer. FIG. 2 shows with references 10a and 11a the servicing positions of the cylinders 10, 11 respectively.

In the example, the detaching cylinder 7 is associated with the lower coupling cylinder 10 and the detaching cylinder 8 is associated with the upper coupling cylinder 11, therefore the detaching cylinder 7 or 8 moves together with the respective coupling cylinder towards the servicing position 7a, 8a. Once the servicing position is reached, the cylinder 10 or 11 for example is lowered with a suitable mechanized system and extracted with a trolley 24.

The cylinder 19, which serves as detaching cylinder from group 9, is also preferably movable between a position adjacent to the upper cylinder 11 (as in Fig. 1) and a position adjacent to the lower cylinder 10 (position 19a of Fig. 2).

FIG. 2 also shows a preheating section 25 of the glass fiber 16, through two groups of infrared lamps.

The detaching cylinders 7, 8 and the coupling cylinders 10, 11 are heated, preferably with diathermic oil.

One or both cylinders 10 or 11 may have a surface suitable for obtaining a desired surface machining or an embossing of the plastic compound sheet 14 or 15, as needed.

Figs. 1 and 2 show a preferred arrangement in which the calendering group 4 is located at higher elevation than the calendering group 1, while the two coupling cylinders are located at an intermediate elevation.

Furthermore, the figures show an example of close arrangement of the calendering and coupling groups so that the plastic compound sheets pass directly from the calendering step to the coupling step.

In said close arrangement, both the lower calendering group 1 and the coupling group 9 are located, in whole or in part, below the vertical of the upper calendering group 4. This can be expressed by observing that there is at least a first vertical plane which intersects at least one cylinder of the first calendering pair 1 and at least one cylinder of the second calendering pair 4 and furthermore there is at least a second vertical plane which intersects both coupling cylinders 10, 11 and at least one of the calendering cylinders. For example, in the figures, said first vertical plane is a vertical plane passing through the center of cylinder 3, which intersects cylinder 5; said second vertical plane is a plane passing through the center of the cylinders 10 and 11 which intersects the cylinder 6.

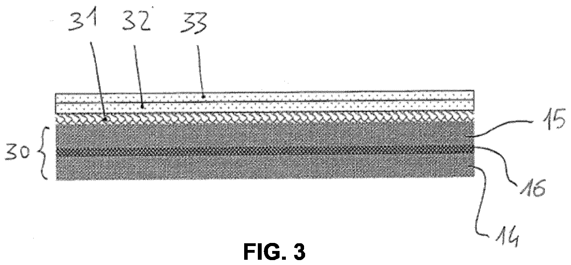

FIG. 3 shows an example of a product obtainable with the process and machinery of the invention. FIG. 3 shows a typical section of a synthetic floor where a base layer 30 consists of the product 18 described above, comprising the sheets 14 and 16 with the glass fiber layer 15 in between. Further layers such as for example a decorated layer 31 (typically with a print that mimics a natural material such as wood), a wear layer 32 and a UV ray protection coating 33, are also shown.

## Claims

1. Process for making a sheet product (18) having two plastic compound layers (14, 15), said compound comprising at least one thermoplastic polymer, such as for example PVC, mixed with at least one filler material and optionally one or more additives, the process comprising:
feeding a first compound as defined above in a first calendering group (1) comprising at least a first pair of calendering cylinders (2, 3) and feeding a second compound as defined above in a second calendering group (4) comprising at least a second pair of calendering cylinders (5, 6), said first compound and second compound having the same or a different composition;
forming a first sheet (14) and a second sheet (15) by means of the calendering process taking place in the passage of the first plastic compound and the second plastic compound in said first group (1) and in said second group (4), respectively;
wherein the first sheet (14), exiting the first group (1), is led directly between two coupling cylinders (10, 11), and the second sheet (15), exiting the second group (4), is led directly between the same two coupling cylinders (10, 11), the passage of said sheets (14, 15) between the exiting from the group (1, 4) and the admission between the coupling cylinders (10, 11) taking place directly without intermediate process steps;
the process comprising the step of coupling together said first sheet (14) and said second sheet (15) by passing between the two coupling cylinders, the two sheets being coupled directly in contact or with the addition of an optional intermediate layer (16) which, if provided, is fed to said two coupling cylinders (10, 11) individually and separately from said first sheet and second sheet.

2. Process according to claim 1, wherein said first sheet (14) and said second sheet (15), at the exit of the respective calender, are separated from a calendering cylinder by means of a respective detaching cylinder (7, 8).

3. Process according to claim 1 or 2, wherein the first plastic compound and the second plastic compound both comprise PVC as a thermoplastic polymer and calcium carbonate as a filler material, preferably wherein the weight percent of calcium carbonate is at least 50%, even more preferably between 50% and 80%.

4. Process according to one of the preceding claims, in which each compound is fed to the respective calender in the form of a continuous bead of material (22 23), which is brought to the viscous state and reduced to sheet in the passage between the calendering cylinders.

5. Process according to one of the preceding claims, in which the coupling between the first sheet and the second sheet occurs with the interposition of an intermediate layer (16), said intermediate layer being preferably made of glass fiber or woven fabric, in which the passage between the two coupling cylinders (10, 11) joins together the first sheet, the second sheet and the intermediate layer simultaneously.

6. Process according to one of the preceding claims, comprising the step of carrying out a process of polishing or surface finishing or embossing on a surface of the first and/or second plastic compound sheet during the passage between the coupling cylinders (10, 11), wherein at least one of said coupling cylinders has a surface configured to perform said process on the sheet in contact therewith.

7. Process according to one of the preceding claims, wherein the first sheet and the second sheet each have a thickness between 0.70 mm and 3.0 mm.

8. Process according to one of the preceding claims, wherein the thickness of the product (18) resulting from the coupling of the first sheet and second sheet, optionally with the intermediate reinforcing layer, is at least 2 mm, preferably in the range from 2 mm to 4 mm.

9. Process according to one of the preceding claims, wherein said two coupling cylinders (10, 11) operate with a gap coupling, in which a gap space exists between the two cylinders and said gap space is controlled to remain constant, or by pressure coupling, in which the pressure exerted by one of the two cylinders against the other is controlled.

10. Process according to one of the preceding claims, wherein the temperature difference of the first sheet and second sheet between the detachment from the calendering cylinders and the admission between the coupling cylinders does not exceed the value of 2 °C.

11. Process for making floor slabs, preferably an LVT or SPC floor, comprising:
making a base layer comprising two plastic compound sheets and optionally an intermediate reinforcing layer, by means of calendering with the process according to one of claims from 1 to 10,
applying to said base layer one or more additional finishing and/or protective layers to obtain the floor slab.

12. Process according to claim 11, wherein also the application of at least one finishing and/or protective layer takes place by calendering.

13. Calender (20) for performing the process of one of the preceding claims, in which said calender (20) comprises:
at least a first pair of calendering cylinders (2, 3) arranged to calender the first plastic compound thus obtaining a first sheet (14);
at least a second pair of calendering cylinders (5, 6) arranged to calender the second plastic compound thus obtaining a second sheet (15);
two coupling cylinders (10, 11) arranged to join together, by calendering, the first sheet coming directly from the first pair of calendering cylinders and the second sheet coming directly from the second pair of calendering cylinders, optionally interposing an intermediate layer (16) placed between said first sheet and said second sheet.

14. Calender according to the claim 13, wherein:
the first pair (1) of calendering cylinders and the second pair (4) of calendering cylinders comprise each an upper cylinder (3, 6) and a lower cylinder (2, 5);
the second pair (4) of calendering cylinders is placed at a greater elevation than the first pair (1), and the two coupling cylinders (10, 11) are located at an intermediate elevation between the two pairs of calendering cylinders,
and wherein the calendering cylinders and the coupling cylinders are close together, whereby:
there is at least one vertical plane that intersects at least one cylinder (3) of the first calendering pair and at least one cylinder (5) of the second calendering pair, and
there is at least one vertical plane that intersects both the coupling cylinders (10, 11) and at least one (6) of the calendering cylinders.

15. Calender according to claim 13 or 14, wherein a first coupling cylinder (10) is associated with a positioning system configured to control the position of said first coupling cylinder with respect to the second coupling cylinder (11), and wherein during the operation with gap coupling the position of said first cylinder (10) is controlled to keep the gap space between the two cylinders (10, 11) constant, and during the operation by pressure coupling the position of said first cylinder (10) is controlled to obtain a desired pressure against the second cylinder (11) operating as a contact cylinder.

16. Calender according to one of claims from 13 to 15, wherein at least one of the two coupling cylinders (10, 11) is movable from the working position to a servicing position (10a, 11a) in which it is accessible for disassembly and replacement and/or for threading the intermediate layer.
